# EUROPEAN PATENT APPLICATION

(11) **EP 2 741 398 A1**
(43) Date of publication of application: **11.06.2014**
(21) Application number: 12195947.2
(22) Date of filing: 06.12.2012
(51) Int. Cl.: H02K 1/24, H02K 1/27, H02K 7/18

(54) **Rotor of an electric generator**

(71) Applicant: Siemens Aktiengesellschaft, 80333 München (DE)
(72) Inventor: Azar, Ziad, Sheffield, S6 2NR (GB); Wu, Lijian, Sheffield, S6 3NT (GB)

(57) **Abstract**

There is described a rotor of an electric generator, preferably an outer rotor of a generator in a wind turbine. This rotor consists of a rotor structure comprising a ferromagnetic material (610,611,612) able to guide the magnetic flux, wherein at least one cavity (615) is formed in the ferromagnetic material (610,611,612) in such a manner that the magnetic flux in a direction substantially perpendicular to the pole body (611) is attenuated by the cavity (615), see stippled line 616.

## Description

### Field of Invention

The present invention relates to the field of electric generators, in particular electric generators for wind turbines.

### Art Background

In electric generators, such as synchronous machines for wind turbines, the rotation of a rotor, which comprises a plurality of magnets, around a stator induces electric current in the stator windings or coils. However, the induced electric current in turn induces a magnetic field (armature reaction field) which may couple back to the rotor and thereby cause a number of undesired effects, such as torque ripple, magnetic force ripple, vibrations and noise.

In general, the above problems occur both in generators where the rotor magnets are permanent magnets (PM rotor) and in generators where the rotor magnets are electromagnets. However, in the latter case (electrical excitation) the armature reaction field may possibly be very high in comparison to the case of a PM rotor because of comparatively shorter effective air-gap length. Hence, a high iron loss in the rotor may occur which can result in a significant amount of torque ripple.

Although pole shaping methods can be employed to reduce torque ripple, this will only be effective for one load point. For example, if the pole shape is optimized to reduce torque ripple at full load, the reduction of torque ripple at half load may not be sufficient. This is because the saturation level is different at different load points. Hence, the optimal pole shape may depend on the particular load point. There may be a need for a way of reducing the disturbing impact of the armature reaction field in an electric generator.

### Summary of the Invention

This need may be met by the subject matter according to the independent claims. Advantageous embodiments of the present invention are described by the dependent claims.

According to a first aspect of the invention there is provided a rotor for an electric generator. The described rotor comprises a rotor structure comprising a ferromagnetic material for guiding a magnetic flux, wherein at least one cavity is formed in the ferromagnetic material in such a manner that the magnetic flux in a predetermined direction within the ferromagnetic material is attenuated by the cavity.

This aspect of the invention is based on the idea that the disturbing impact caused by a magnetic field originating from a source external to the rotor, such as a reaction magnetic field from a stator, can be reduced by forming at least one cavity in the ferromagnetic material in such a manner that the possibly disturbing magnetic flux within the ferromagnetic material is attenuated. In other words, the at least one cavity is provided to act as a flux barrier against magnetic flux in a direction which would have an undesirable influence on the rotor, such as causing ripple and/or vibrations.

In the present context, the term "rotor" may in particular denote the rotating part of an electric generator which by rotating either within or around (on the outside of) a stator generates a time-varying magnetic field which induces electric current in corresponding coils or windings of the stator.

In the present context, the term "cavity" may in particular denote a hollow region or a cut-out portion in the ferromagnetic material.

The cavity preferably exhibits a significantly lower permeability than the ferromagnetic material.

In the present context, the term "predetermined direction" may in particular denote a particular direction (relative to the rotor structure, which may also be referred to as "yoke structure") in which the presence of magnetic flux within the rotor structure may disturb the function of the rotor, i.e. by causing torque ripple. In the field of electric generators reference is often made to the "direct axis" or "d-axis" and to the "quadrature axis" or "q-axis". With this terminology, the predetermined direction may be substantially parallel to the q-axis.

In the present context, the term "attenuated" may in particular denote that less or no magnetic flux occurs in the predetermined direction within the ferromagnetic material due to the presence of the at least one cavity as compared to the case where the at least one cavity is not present.

In other words, the at least one cavity formed in the ferromagnetic material of the rotor structure has the function of preventing an undesirable magnetic flux in the predetermined direction.

Thereby, when the rotor is mounted in a generator, it will be able to rotate (relative to a stator of the generator) more smoothly and with less vibration and ripple.

According to an embodiment of the invention, the at least one cavity has an elongate shape.

The elongate shape of the cavity has the effect that magnetic flux through the rotor structure in the transverse direction relative to the longer dimension of the cavity, i.e. across the elongate shape, is strongly attenuated. On the other hand, magnetic flux in the direction parallel to the longer dimension of the cavity, i.e. along the elongate shape, will not be significantly attenuated since the magnetic flux in this direction will only see a very small cavity width and will accordingly not be influenced in the ferromagnetic material along the longer sides of the elongate cavity.

According to a further embodiment of the invention, the elongate shape is substantially perpendicular to the predetermined direction.

Thereby, the elongate cavity attenuates magnetic flux in the predetermined direction significantly more than it attenuates magnetic flux in directions that are substantially perpendicular to the predetermined direction.

This is advantageous in cases where the magnetic field in the rotor structure which is intended to induce electric current in a stator winding extends in a direction substantially perpendicular to the predetermined direction. In such cases, the desired magnetic field, i.e. the magnetic field which induces current in the stator, will not be significantly attenuated by the elongate cavity, whereas a reaction field (from the stator) which extends substantially in the predetermined direction will be strongly attenuated.

Thereby, ripple and vibrations caused by a stator reaction field may be significantly reduced.

According to a further embodiment of the invention, the at least one cavity is filled with air.

Atmospheric air has a significantly lower permeability than ferromagnetic materials. The cavity may easily be filled with air, i.e. by simply forming the cavity so as to be open to the outside.

Thus, filling the cavity with air is a simple and cheap way of providing the cavity with its desired attenuating function.

According to a further embodiment of the invention, the at least one cavity comprises a plurality of cavities, each of the plurality of cavities being adapted to attenuate the magnetic flux in the predetermined direction within the ferromagnetic material.

By providing a plurality of cavities, the resulting attenuation of magnetic flux in the predetermined direction can be further improved or intensified.

According to a further embodiment of the invention, the plurality of cavities is arranged such as to be separated from each other in the predetermined direction.

In the present context, the term "separated from each other in the predetermined direction" may particularly denote that the cavities are arranged separate from one another along a line or curve extending in the predetermined direction.

In other words, neighboring cavities are separated from one another by ferromagnetic material such that magnetic flux may occur between the cavities, in particular in directions substantially perpendicular to the predetermined direction. On the other hand, magnetic flux along and in parallel with the line or curve in the predetermined direction will be strongly attenuated.

The plurality of separated cavities is preferably arranged in a way to achieve a desired flux density distribution in the airgap between the stator and rotor. The ferromagnetic material between two neighboring cavities is denoted a "flux channel". The cavities are preferably located in a way to make the flux channels having different magnetic resistance.

Therefore, the flux density in the airgap can be controlled by the location of cavities. For example, a sinusoidal airgap flux density can be achieved by locating cavities so that the flux channels in middle of the pole have less magnetic resistances while the flux channels at the sides of the pole have larger magnetic resistances.

According to a further embodiment of the invention, the rotor structure further comprises a permanent magnetic material, the permanent magnetic material being arranged on a surface of the ferromagnetic material.

The permanent magnetic material may be provided such as to provide a magnetic field that can induce an electric current in a corresponding stator winding when the rotor is moved relative to the stator. More specifically, the permanent magnetic material may advantageously be arranged on a surface of the yoke structure which is intended to face the stator.

So-called pole shaping techniques may be applied to optimize the shape of the permanent magnetic material in relation to a given stator structure.

According to a further embodiment of the invention, the rotor structure further comprises at least one pole body surrounded by a field winding.

In the present context, the term "pole body" may particularly denote an elongate structure of ferromagnetic material. The pole body may preferably have a quadratic, rectangular, circular or elliptical cross-sectional shape.

In the present context, the term "field winding" may particularly denote a winding of electrically conductive wire.

In the present context, the term "surrounded by a field winding" may particularly denote that the field winding is wound around the pole body such as to substantially cover the outer surface of the pole body.

When an electric current is fed to the field winding, a magnetic field is induced and the corresponding magnetic flux is guided by the pole body such as to be able to induce an electric current in a stator coil in a similar way as discussed above in relation to the embodiment utilizing a permanent magnetic material. In other words, the present embodiment relies on an electromagnet instead of a permanent magnet.

By using an electromagnet for generating the desired magnetic field, the need for expensive permanent magnetic material can be obviated. In large electric generators, such as generators for wind turbines, the resulting cost reduction can be significant.

According to a further embodiment of the invention, the rotor structure further comprises a pole shoe arranged at one end of the at least one pole body.

The pole shoe may preferably be arranged at the end of the pole body which is intended to face the stator in a generator machine. More specifically, the pole shoe may be a generally flat structure which is larger than the cross-section of the pole body. Thereby, the field winding surrounding the pole body may be kept in place by the pole shoe.

Also in this embodiment, the aforementioned pole shaping techniques may be applied to optimize the shape of the pole shoe in relation to a given stator structure.

According to a further embodiment of the invention, the rotor structure further comprises a support structure.

In the present context, the term "support structure" may particularly denote a structure adapted to support the rotor structure. The support structure may accordingly be made of a material such as steel or iron which is sufficiently strong to support one or more rotor structures as described above.

More specifically, the support structure may be cylinder adapted to rotate around a stator.

In all of the embodiments described above, the at least one cavity may be formed in any part of the rotor structure, in particular in the ferromagnetic material thereof. With regard to the embodiments relying on an electromagnet, this means that the at least one cavity may be formed in the pole shoe and/or in the pole body and/or in any other ferromagnetic part of the rotor structure.

According to a second aspect of the invention there is provided an electric generator. The described generator comprises (a) a stator, and (b) a rotor according to the first aspect or any of the embodiments described above, wherein the rotor is arranged to be rotatable around the stator.

This aspect of the invention is based on the idea that the disturbing impact caused by a reaction magnetic field from the stator can be reduced by forming at least one cavity in the ferromagnetic material in such a manner that disturbing magnetic flux within the ferromagnetic material is attenuated. In other words, the at least one cavity is provided to act as a flux barrier against magnetic flux in a direction which would have an undesirable influence on the rotor, such as causing ripple and/or vibrations.

In the present context, the term "stator" may particularly denote a structure relative to which the rotor moves in such a way that electric current is induced in a stator coil by a magnetic field generated by the rotor (permanent magnets or electromagnets). In other words, the stator is the part of the generator which is supposed to remain static while the rotor is rotated around (or within) it by wind, water or some other force acting on the rotor.

As described above, the at least one cavity formed in the ferromagnetic material of the rotor reduces disturbing magnetic flux in the rotor which may originate from a reaction magnetic field caused by the current flowing in the stator coil(s).

Thereby, torque ripple and vibrations in the generator due to the stator reaction field can be significantly reduced or even eliminated.

As a result, the durability of the generator is improved and the noise caused by the generator is reduced.

According to a further embodiment of the invention, the predetermined direction is substantially parallel to the direction of rotation of the rotor.

In the present context, the wording "the predetermined direction is substantially parallel to the direction of rotation" may particularly denote that the predetermined direction is parallel to - or close to being parallel to - a tangent of the curve (e.g. circle) which the rotor follows during rotation.

According to a third aspect of the invention there is provided a wind turbine comprising a generator according to the second aspect or any of the embodiments described above.

This aspect of the invention is based on the same idea as the second aspect described above.

The reduced wear of the generator is particularly advantageous with regard to wind turbines as service and repair work on generators in wind turbines is complicated, dangerous and expensive due to the fact that the wind turbine is located at the top of a tower many meters above ground or sea level. Furthermore, the reduction of generator noise is very desirable with regards to wind turbines as many people living in the vicinity of wind turbines and wind parks experience generator noise as a significant source of disturbance.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a side view of a conventional rotor with permanent magnets.
Figure 2 shows a side view of a conventional rotor with electromagnets.
Figure 3 shows a perspective view of a part of the conventional rotor shown in Figure 2.
Figure 4 shows a side view of a part of a rotor in accordance with an embodiment.
Figure 5 shows a side view of a part of a rotor in accordance with an embodiment.
Figures 6A and 6B illustrate the working principle of the embodiment shown in Figure 4.
Figures 7A-7D show side views rotors in accordance with various embodiments.
Figure 8 shows a side view of a part of a rotor with permanent magnets in accordance with an embodiment.
Figure 9 shows a side view of a part of a rotor in accordance with an embodiment and a corresponding illustration of magnetic flux density distribution.

### Detailed Description

The illustration in the drawing is schematic. It is noted that in different figures, similar or identical elements are provided with the same reference signs or with reference signs, which are different from the corresponding reference signs only within the first digit.

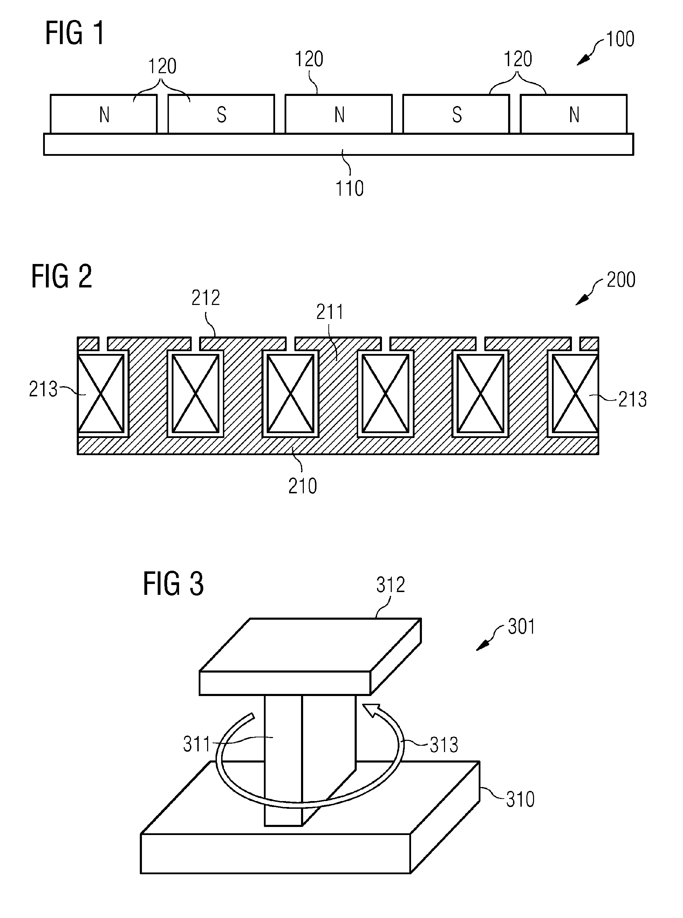

Figure 1 shows a side view of a conventional rotor 100 with permanent magnets 120. The rotor 100 comprises a rotor yoke 110 on which a plurality of permanent magnets 120 are arranged side by side. The rotor yoke 110 comprises a ferromagnetic material, such as iron. As indicated by the letters "N" and "S", each of the permanent magnets 120 is surrounded by permanent magnets 120 of the opposite polarity. In other words, each N-magnet has two S-magnets as neighbors and vice versa.

Figure 2 shows a side view of a conventional rotor 200 with electromagnets. The rotor 200 comprises a rotor yoke 210, pole bodies 211 and pole shoes 212. The pole bodies 211 extend from the rotor yoke 210 and are surrounded by field windings 213. The pole shoes 212 are formed at the end of the pole body 211 opposite to the rotor yoke 210. The field windings 213 consist of properly isolated electrically conductive wire which is wound around the pole bodies 211.

Figure 3 shows a perspective view of a part 301 of the conventional rotor 200 shown in Figure 2. More specifically, Figure 3 shows a part of the rotor yoke 310, one pole body 311 and the corresponding pole shoe 312. The field winding 313 is illustrated as an arrow showing the winding direction of the corresponding wire. As shown, the pole body 311 is formed as a rectangular wall between the rotor yoke 310 and the pole shoe 312. The rotor yoke 310, pole body 311 and pole show 312 are made of solid ferromagnetic material.

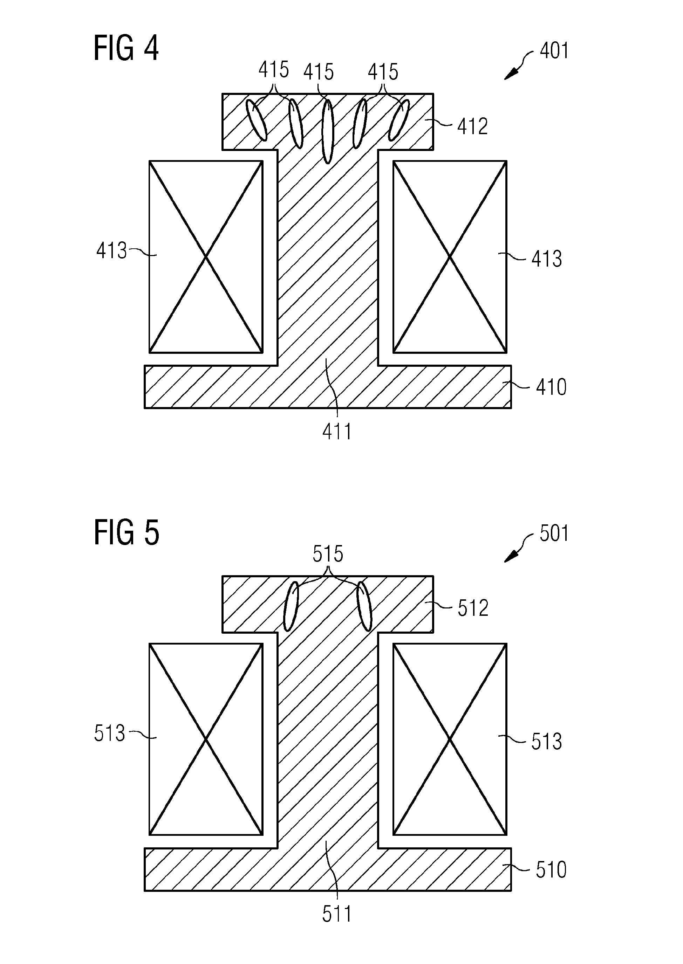

Figure 4 shows a side view of a part 401 of a rotor in accordance with an embodiment. Like the part 301 shown in Figure 3 above, the part 401 comprises a rotor yoke 410, a pole body 411, a pole shoe 412, and a field winding 413 wound around the pole body 411 between the rotor yoke 410 and the pole shoe 412. The yoke 410, the pole body 411 and the pole shoe 412 are made of a ferromagnetic material and form a rotor structure for guiding magnetic flux when a magnetic field is induced by a current running in the field winding 413.

Different from the conventional rotor illustrated in Figures 2 and 3, the rotor according to the embodiment shown in Figure 4 comprises five cavities 415 which are formed in the rotor structure, more specifically in the pole shoe 412 and the upper part of the pole body 411. The cavities extend through the ferromagnetic material in the direction perpendicular to the plane of the figure. Furthermore, the five cavities 415 have elongate ellipse-like cross-sections and are arranged such that the longer dimension of each cavity 415 extends substantially in parallel with the pole body 411. As can be seen in Figure 4, only the middle cavity 415 extends exactly in parallel with the pole body 411, whereas the two left cavities 415 are slightly tilted to the left and the two right cavities 415 are slightly tilted to the right. However, the main direction of the cavity cross sections is substantially parallel with the pole body 411, i.e. the elongate cavities 415 all extend mainly in the up-down direction of Figure 4.

Figure 5 shows a side view of a part 501 of a rotor in accordance with another embodiment. The part 501 is identical to the part 401 shown in Figure 4 except for the fact that it only comprises two cavities 515 (a right cavity 515 and a left cavity 515) which are formed in the pole shoe 512. In this embodiment, the left cavity 515 is tilted slightly to the right whereas the right cavity 515 is tilted slightly to the left.

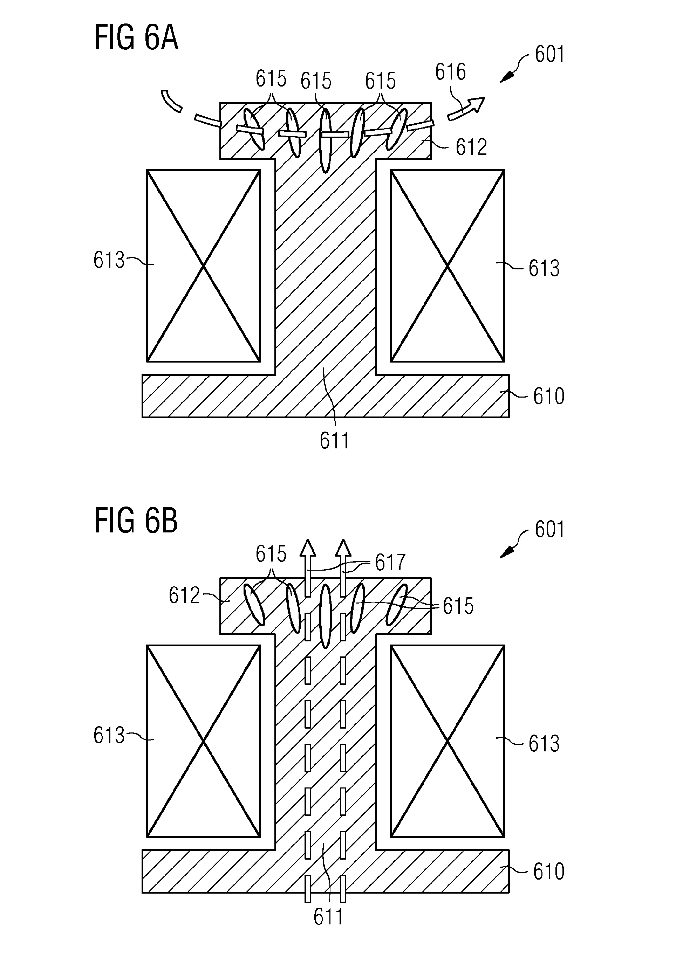

Figures 6A and 6B illustrate the working principle of the embodiments shown in Figures 4 and 5. The structure of the part 601 shown in Figures 6A and 6B is identical to the structure of the part 401 shown in Figure 4. Therefore, for reasons of brevity, reference is made to the above description of Figure 4.

Figure 6A illustrates how a magnetic field extending in a direction substantially perpendicular to the pole body 611 would have to cross or pass through the elongate cavities 615. This is illustrated by arrow 616. The cavities are preferably filled with air which has a significantly lower permeability than the ferromagnetic material of the rotor structure 610, 611, 612. The permeability of air is typically only a fraction (less than 1%) of the permeability of the ferromagnetic material. Therefore, such a magnetic field will be strongly attenuated and consequently the resulting magnetic flux in the direction indicated by the arrow 616 will only be a fraction of the magnetic flux that would be present if the cavities were replaced by solid ferromagnetic material (as in the conventional rotors shown in Figures 1-3).

On the other hand, as shown in Figure 6B, the magnetic flux in the direction substantially parallel to the pole body 611 will only be insignificantly attenuated as there is plenty of ferromagnetic material between the cavities 615 which allows the magnetic flux in this direction. This is indicated by arrows 617 in Figure 6B. It is noted that the direction indicated by arrows 617 is also the direction of the magnetic field which is generated when an electric current flows through the field winding 613 which is wound around the pole body 611. Thus, the cavities 615 will only have an insignificant influence on the magnetic field of the rotor which is intended to induce an electric current in a stator coil (not shown) when the rotor is rotated, e.g. by wind, water, steam or some other force acting on the rotor.

As shown in Figures 6A and 6B (and in Figures 4 and 5), some of the cavities 615 are slightly tilted. This is done in order to achieve that the longer dimensions of each cavity is as parallel as possible to the direction of the desired magnetic field at the respective positions of the cavities 615. Thus, the outer cavities 615 are tilted slightly more than the inner cavities 615.

Summarizing the above, it has been illustrated that the magnetic field generated by the rotor part 601 is hardly influenced by the cavities 615, whereas a magnetic field in the perpendicular direction indicated by the arrow 616 in Figure 6A, such as a reaction field induced by electric current in the stator, will be strongly attenuated. Thereby, negative impact of such perpendicular magnetic fields (e.g. ripple, vibrations and/or noise) is significantly reduced in comparison to conventional rotors, such as the ones shown in Figures 1-3.

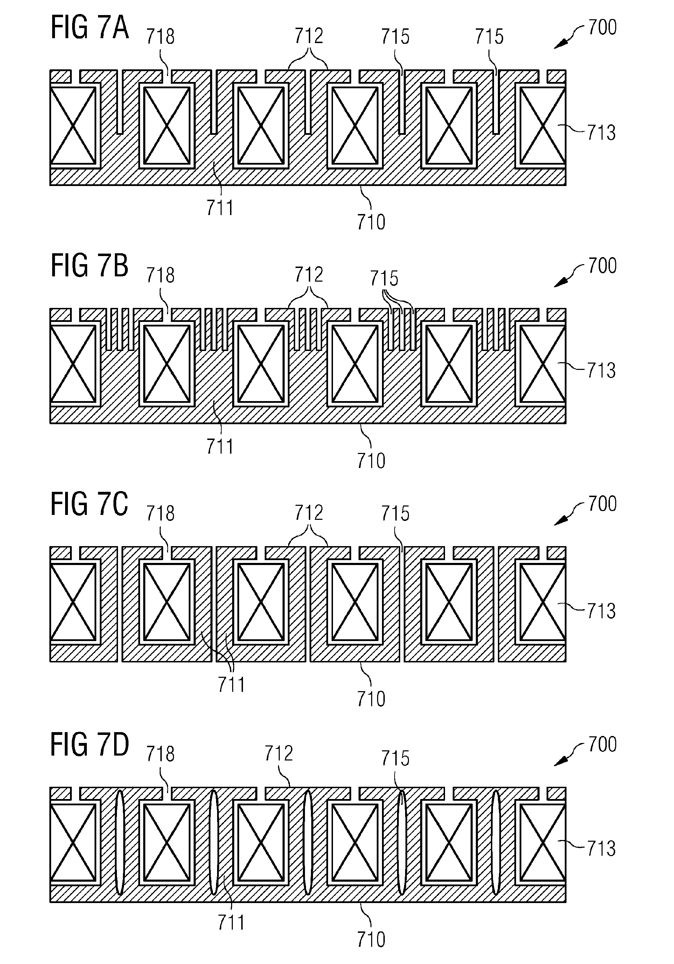

Figures 7A-7D show side views of rotors in accordance with various embodiments of the invention. Each of the illustrated embodiments follows the same principle as discussed above and differs from the previously described embodiments only in the specific implementation of the cavities.

In the embodiment shown in Figure 7A, each rotor structure comprises a single cavity 715 extending through the middle of the pole shoe 712 and about halfway through the pole body 711. As shown, the pole shoes 712 are separated from each other by gaps 718.

The embodiment shown in Figure 7B differs from the embodiment of Figure 7A only in that each rotor structure comprises three parallel cavities 715 extending through the pole shoe 712 and about one third through the pole body 711.

The embodiment shown in Figure 7C differs from the embodiment of Figure 7A only in that the cavities 715 extend all the way through the pole body 711 and the rotor yoke 710 such that the rotor structures are separated from one another. It should be noted that the rotor structure further comprises a support structure (not shown) for holding all the rotor structures of the rotor. This applies equally to all other embodiments described in this patent application.

Finally, the embodiment shown in Figure 7D differs from the embodiment of Figure 7C only in that the cavities 715 do not extend all the way through the upper part of the pole shoe 712 and the lower part of the rotor yoke 710. In other words, the pole shoe 712 and the rotor yoke 710 are not cut completely through.

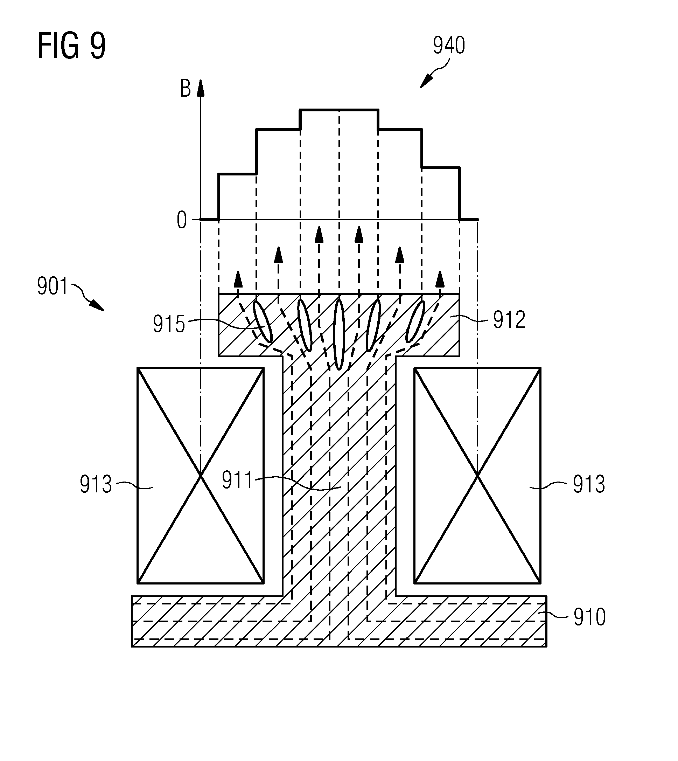

Figure 9 shows a side view of a part of a rotor in accordance with an embodiment together with a graphical representation of the magnetic flux distribution in the airgap between the rotor and a stator (not shown). The rotor part 901 shown in Figure 9 comprises five cavities 915 which are formed in the rotor structure, more specifically in the pole shoe 912 and the upper part of the pole body 911. The cavities 915 extend through the ferromagnetic material in the direction perpendicular to the plane of the figure. Furthermore, the cavities 915 have elongate ellipse-like cross-sections and are arranged such that the longer dimension of each cavity 915 extends substantially in parallel with the pole body 911. As can be seen in Figure 9, only the middle cavity 915 extends exactly in parallel with the pole body, whereas the two left cavities 915 are slightly tilted to the left and the two right cavities 915 are slightly tilted to the right. However, the main direction of the cavity cross sections is substantially parallel with the pole body 911, i.e. the elongate cavities all extend mainly in the up-down direction of Figure 9. Furthermore, the two flux channels in the middle of the pole shoe 912 are easier for flux to go through than the other flux channels. In particular, it is significantly more difficult for flux to go through the two flux channels at the sides of the pole shoe 912 in comparison to the aforementioned middle flux channels. Therefore, as illustrated in the graph 940, the airgap flux density in the middle of the pole is larger than the flux density at the sides of the pole. As can be seen, the airgap flux density distribution in the air-gap is close to a sinusoidal flux density distribution. It is noted that the graph 940 illustrates the magnetic flux density as a function of the width of the pole shoe 912.

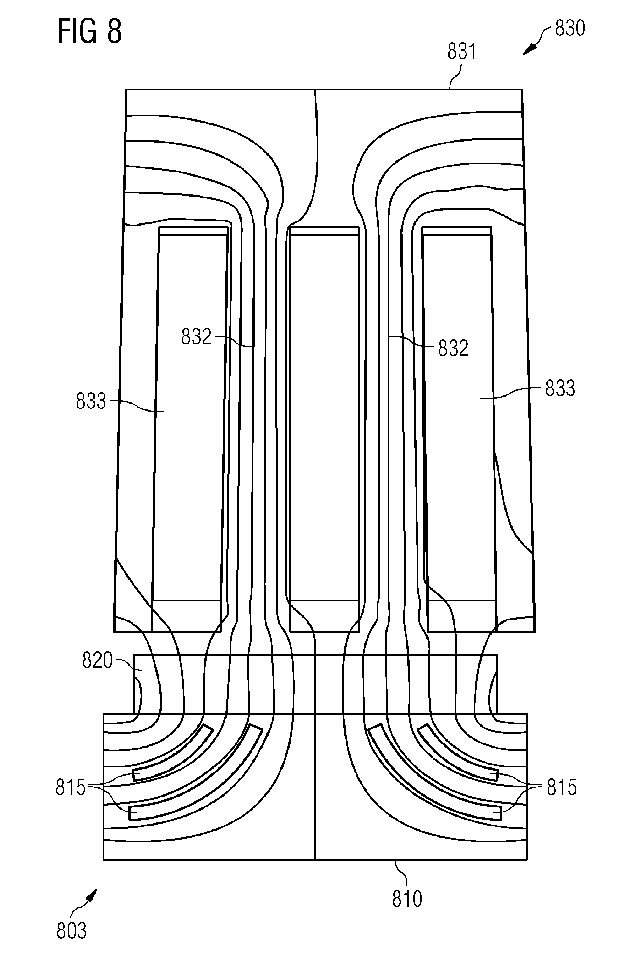

Figure 8 shows a side view of a part of a rotor 803 with permanent magnets in accordance with an embodiment. Further,

Figure 8 shows a part 830 of a corresponding stator of a generator in accordance with an embodiment. The stator comprises a stator yoke 831 with teeth 832 surrounded by stator coils 833.

As shown in the lower part of Figure 8, the part 803 of the rotor of this embodiment differs from the conventional permanent magnet rotor shown in Figure 1 in that elongate arc-shaped cavities 815 are formed in the rotor yoke 810. The cavities 815 are arranged such as to have a minimum influence on the magnetic field originating from the permanent magnet 820, i.e. the arcs are shaped to follow the pattern of the field lines of this magnetic field. At the same time, the cavities 815 provide significant attenuation of a disturbing reaction field from the stator 830 (which is induced by the current flowing in the stator coils 833).

Thereby, the unwanted impact of the stator reaction field can be significantly reduced by applying the same principle as described above with regard to the embodiments relying on electromagnets. That is, an electric generator using permanent magnets 820 and a rotor structure 810 as shown in Figure 8 may exhibit significantly less torque ripple and vibrations than the conventional structure shown e.g. in Figure 1. Thereby, the durability of the generator is improved and environmental disturbance caused e.g. by noise is significantly reduced without having to use expensive acoustically isolating constructions and materials.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A rotor for an electric generator, the rotor comprising a structure comprising a ferromagnetic material for guiding a magnetic flux,
wherein at least one cavity (415, 515, 615, 715, 815, 915) is formed in the ferromagnetic material in such a manner that magnetic flux in a predetermined direction within the ferromagnetic material is attenuated by the cavity (415, 515, 615, 715, 815, 915).

2. The rotor according to the preceding claim, wherein the at least one cavity (415, 515, 615, 715, 815, 915) has an elongate shape.

3. The rotor according to the preceding claim, wherein the elongate shape is substantially perpendicular to the predetermined direction.

4. The rotor according to any of the preceding claims, wherein the at least one cavity (415, 515, 615, 715, 815, 915) is filled with air.

5. The rotor according to any of the preceding claims, wherein the at least one cavity (415, 515, 615, 715, 815, 915) comprises a plurality of cavities, each of the plurality of cavities being adapted to attenuate the magnetic flux in the predetermined direction within the ferromagnetic material.

6. The rotor according to the preceding claim, wherein the plurality of cavities is arranged such as to be separated from each other in the predetermined direction.

7. The rotor according to any of the preceding claims, wherein the rotor structure further comprises a permanent magnetic material (820), the permanent magnetic material (820) being arranged on a surface of the ferromagnetic material.

8. The rotor according to any of claims 1 to 6, wherein the rotor structure further comprises at least one pole body (411, 511, 611, 711, 911) surrounded by a field winding (413, 513, 613, 713, 913).

9. The rotor according to the preceding claim, wherein the rotor structure further comprises a pole shoe (412, 512, 612, 712, 912) arranged at one end of the at least one pole body (411, 511, 611, 711, 911).

10. The rotor according to claim 8 or 9, wherein the at least one cavity (415, 515, 615, 715, 815, 915) is formed in any one of the at least one pole body (411, 511, 611, 711, 911), the pole shoe (412, 512, 612, 712, 912), and/or a rotor yoke (410, 510, 610, 710, 910).

11. The rotor according to any of the preceding claims, wherein the rotor structure further comprises a support structure.

12. An electric generator comprising
a stator (830), and
a rotor (700) according to any of the preceding claims, wherein the rotor (700) is arranged to be rotatable around the stator (830).

13. The generator according to the preceding claim, wherein the predetermined direction is substantially parallel to the direction of rotation of the rotor (700).

14. A wind turbine comprising a generator according to claim 12 or 13.
